# EUROPÄISCHE PATENTSCHRIFT

(11) **EP 2 406 474 B1**
(45) Veröffentlichungstag und Bekanntmachung des Hinweises auf die Patenterteilung: **24.08.2016**
(21) Anmeldenummer: 10706655.7
(22) Anmeldetag: 04.03.2010
(51) Int. Cl.: F02B 29/04, F28D 1/03

(54) **LADELUFTKÜHLER ZUR ANORDNUNG IN EINEM SAUGROHR**
CHARGE AIR COOLER FOR LOCATION IN INTAKE AIR DUCT
REFROIDISSEUR D'AIR DE SURALIMENTATION DANS COLLECTEUR D'ADMISSION

(30) Priorität: 10.03.2009 DE 102009012024
(43) Veröffentlichungstag der Anmeldung: 18.01.2012
(73) Patentinhaber: MAHLE Behr GmbH & Co. KG, 70469 Stuttgart (DE)
(72) Erfinder: GESKES, Peter, 73760 Ostfildern (DE); SAUMWEBER, Christian, 70378 Stuttgart (DE)
(74) Vertreter: Grauel, Andreas
(86) Internationale Anmeldenummer: PCT/EP2010/052776
(87) Internationale Veröffentlichungsnummer: WO 2010/102947

(56) Entgegenhaltungen:
- EP-A1- 2 014 892
- EP-A2- 1 296 108
- WO-A1-2006/125919
- WO-A1-2006/128701
- DE-A1-102007 030 464

## Beschreibung

Die Erfindung betrifft einen Ladeluftkühler zur Anordnung in einem Saugrohr nach dem Oberbegriff des Anspruchs 1.

Es ist bekannt, Ladeluftkühler als indirekte Kühler auszubilden, so dass die Wärme von einem flüssigen Kühlmittel abgeführt wird. Solche Ladeluftkühler können insbesondere als integrierte Einheit mit einem Saugrohr eines Verbrennungsmotors ausgebildet sein.

Dabei ist es bekannt, einen Boden eines Ladeluftkühlers in Rohrbündel-Bauweise zugleich als Befestigungsplatte zur Festlegung am Rand einer Saugrohröffnung auszubilden.

Die WO 2006/128701 A1 offenbart einen Ladeluftkühler für den Einsatz in Kraftfahrzeugen. Die WO 2006/125919 A1 offenbart ebenso einen Ladeluftkühler für Kraftfahrzeuge.

Es ist die Aufgabe der Erfindung, einen Ladeluftkühler zur Anordnung in einem Saugrohr anzugeben, der auf einfache Weise und zuverlässig dichtend mit dem Saugrohr verbunden ist.

Diese Aufgabe wird für einen eingangs genannten Ladeluftkühler erfindungsgemäß mit den kennzeichnenden Merkmalen des Anspruchs 1 gelöst. Durch die separate Ausbildung von Flanschglied und Bodenglied kann eine bessere Toleranz gegenüber Vibrationen erzielt werden. Zudem wird eine größere Flexibilität bezüglich Formgebung und Materialpaarungen von Saugrohr und/oder Flanschglied erzielt. Je nach Detailgestaltung kann ein weiterer Vorteil der Erfindung auch darin liegen, dass die Verbindung zwischen Saugrohr und Flanschglied nicht durch etwaige Flussmittelreste oder ähnliche Verschmutzungen aus einer Verlötung des Kühlerblocks beeinträchtigt wird.

Bei einer Ausführungsform der Erfindung besteht das Bodenglied aus Aluminium, wobei die Kanäle als mit dem Bodenglied verlötete Flachrohre ausgebildet sind. Bei einer solchen Ausführungsform wird die Verbindungsstelle der Flachrohre am Bodenglied durch die erfindungsgemäße Lösung in besonderem Maße von Vibrationen und mechanischen Spannungen entlastet.

Bei der kostengünstigen und einfachen erfindungsgemäßen Ausführungsform besteht das Flanschglied aus einem Kunststoff. In erfindungsgemäßer, einfacher Bauweise ist dabei zwischen Bodenglied und Flanschglied eine Dichtung, bevorzugt eine O-Ring-Dichtung, vorgesehen. Ergänzend ist auch eine Dichtung zwischen Bodenglied und Saugrohr vorgesehen.

Bei Ausführungsform der Erfindung bildet das Flanschglied einen Teil des Sammlers aus, beispielsweise einen Sammlerkasten. Insbesondere kann das Flanschglied dabei sowohl eine Trennwand zwischen Außenraum und Ladeluft als auch zwischen Kühlmittel und Ladeluft bzw. Außenluft ausbilden. Das Flanschglied kann zum Beispiel als Kunststoff-Formteil ausgebildet sein, wodurch es auf einfache und kostengünstige Weise zur Erfüllung dieser Funktionen ausformbar ist. Erfindungsgemäß umfasst es auch eine Trennwand des Sammlers. Ebenso ist auf einfache und kostengünstige Weise der Kühlmittelanschluss an dem Flanschglied ausgebildet, zum Beispiel in Form von materialeinheitlich-einstückigen Kunststoffstutzen. Bei einer besonders bevorzugten Detailgestaltung hat das Bodenglied eine Bördelung, insbesondere Wellschlitz-Bördelung, zur Verbindung mit dem Flanschglied. Durch diese oder andere Maßnahmen kann eine einfache Montage, etwa durch Verrastung von Bodenglied und Flanschglied bzw. Sammlerkasten, erreicht werden.

Bei einer weiteren Ausführungsform der Erfindung ist das Flanschglied stoffschlüssig, bevorzugt mittels Verklebung und/oder Verschweißung, besonders bevorzugt Reibverschweißung, mit dem Saugrohr verbindbar. Neben der sicheren und dauerhaften Festlegung kann die Zahl der erforderlichen Dichtungen bei einer solchen Gestaltung minimiert werden. Alternativ oder ergänzend kann je nach Anforderungen aber auch eine Verschraubung, Vernietung oder sonstige Festlegung des Flanschglieds an dem Saugrohr erfolgen.

Besonders vorteilhaft ist das Flanschglied über eine im Wesentlichen kreisringförmige Fläche mit dem Saugrohr verbunden, bevorzugt mittels Reibverschweißung. Bei kreisförmiger Verbindungsstelle ist eine Reibverschweißung einfach, kostengünstig und sicher über eine hochdynamische Vibrationsbewegung in Kreisrichtung erzeugbar.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt eine schematische Darstellung eines Ladeluftkühlers nach dem Stand der Technik.
- Fig.2: zeigt eine räumliche Darstellung eines nicht erfindungsgemäßen Beispiels eines Ladeluftkühlers.
- Fig. 3: zeigt eine Schnittansicht des Ladeluftkühlers aus Fig. 2.
- Fig. 4a und Fig. 4b: zeigen zwei Explosionszeichnungen des Ladeluftkühlers aus Fig. 2 aus verschiedenen Perspektiven.
- Fig. 5: zeigt eine schematische Schnittansicht eines Ausführungsbeispiels eines erfindungsgemäßen Ladeluftkühlers.
- Fig. 6: zeigt eine Schnittansicht eines nicht erfindungsgemäßen Beispiels eines Ladeluftkühlers.
- Fig. 7: zeigt eine räumliche Ansicht des Ladeluftkühlers aus Fig. 6.
- Fig. 8: zeigt eine schematische Draufsicht auf ein nicht erfindungsgemäßen Beispiels eines Ladeluftkühlers.

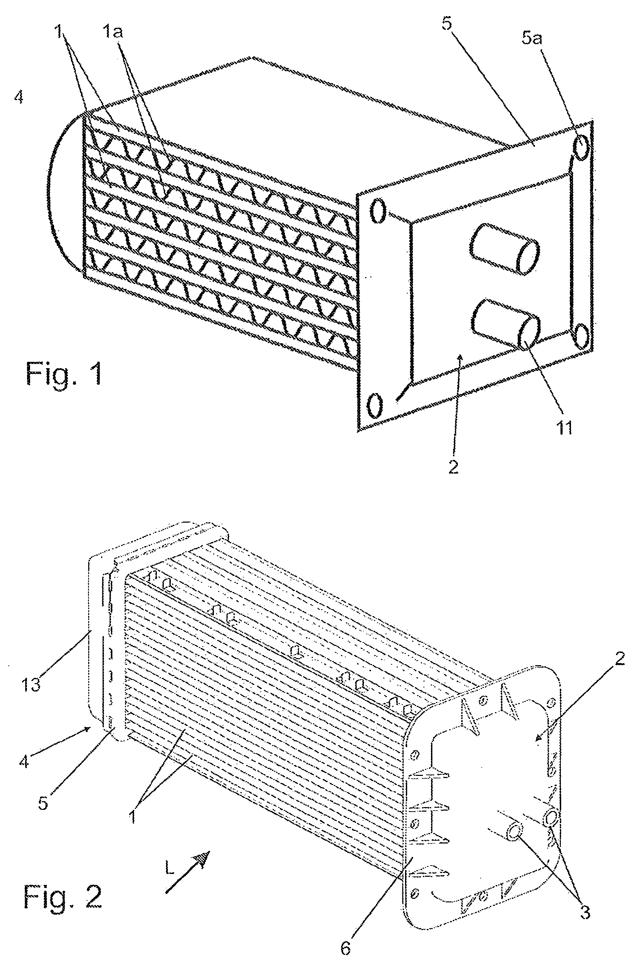

Der In Fig. 1 gezeigte Ladeluftkühler nach dem Stand der Technik umfasst einen aus einem Bündel von Flachrohren 1 mit dazwischen angeordneten Rippen 1a ausgebildeten Kühlerblock. Die Flachrohre 1 bilden Kanäle für ein flüssiges Kühlmittel, das über einen Sammler 2 mit Kühlmittelanschlüssen 3 auf die Kanäle 1 verteilt wird. Am anderen Ende der Kanäle 1 wird das Kühlmittel in einem zweiten Sammler 4 umgelenkt, so dass der Ladeluftkühler nach Art eines U-flow-Kühlers ausgebildet ist. Die Kanäle bzw. Flachrohre 1 münden in ein vorliegend plattenförmiges Bodenglied 5 des Sammlers 2, das sich randseitig über den Kühlerblock hinaus erstreckt und mit Montagebohrungen 5a zur Festlegung an einer Einschuböffnung in einem Saugrohr (in Fig. 1 nicht dargestellt) ausgestattet ist. Das Bodenglied 2 des vorbekannten indirekten Ladeluftkühlers bildet daher zugleich ein Flanschglied zur Festlegung an dem Saugrohr aus.

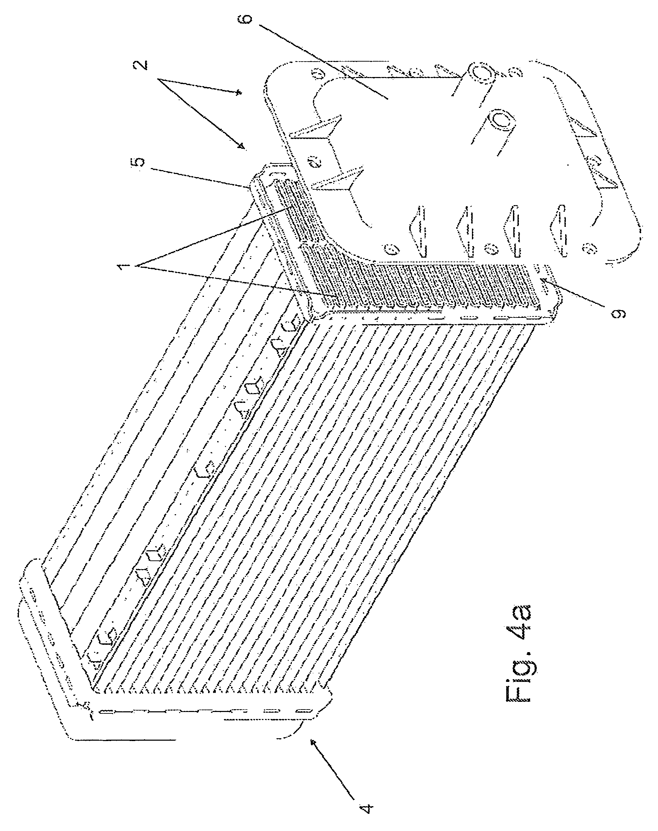

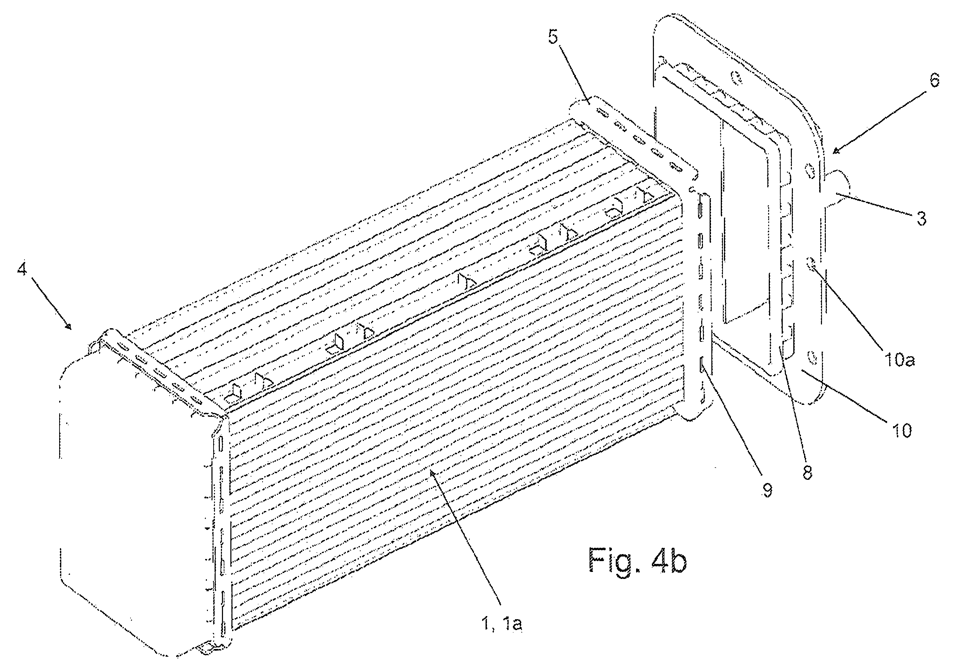

Der in Fig. 2 bis Fig. 4b gezeigte, nicht erfindungsgemäße Ladeluftkühler umfasst einen zweireihigen Stapel von Flachrohren 1, zwischen denen Rippen 1 a flächig verlötet sind. Die Ladeluft L umströmt die Flachrohre bzw. Kanäle 1 und Rippen, wobei die Kanäle 1 ihrerseits zur Abführung der Wärme von flüssigem Kühlmittel, zum Beispiel eines Niedertemperatur-Kühlkreislaufs, durchströmt werden.

Die Flachrohre 1 bilden insgesamt einen Kühlerblock aus und münden mit jedem ihrer Enden jeweils in einem Bodenglied 5, das als Aluminium-Blechformteil ausgebildet ist. Die beiden endseitigen Bodenglieder 5, die Flachrohre 1 und die Rippen werden nach einer mechanischen Vormontage in einem Lötofen miteinander verlötet. Insbesondere können die Bodenglieder 5 zur weiteren Vereinfachung und Kostenreduzierung als Gleichteile ausgebildet sein.

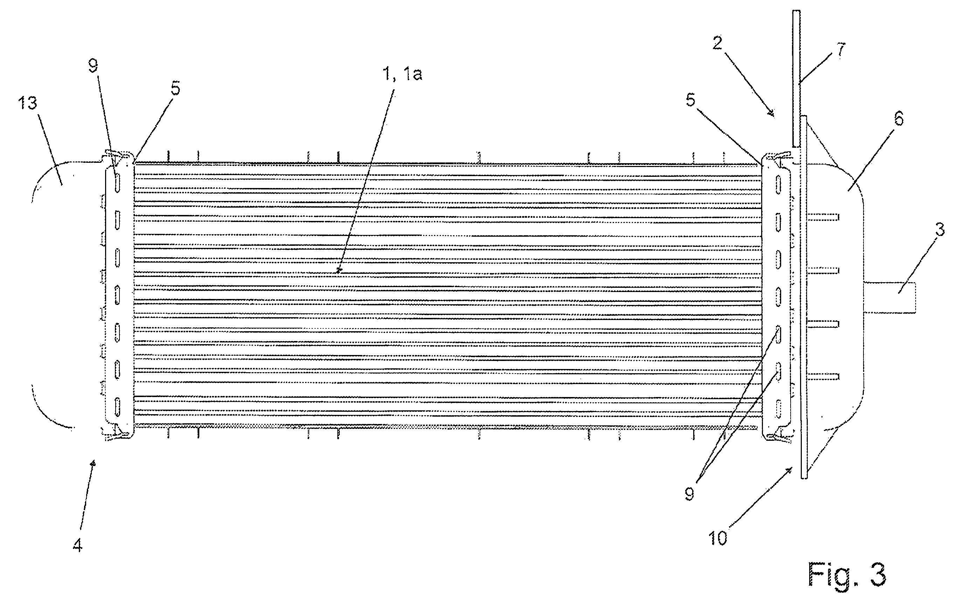

Das erste der Bodenglieder 5 ist Teil eines ersten, anschlussseitigen Sammlers 2 des Ladeluftkühlers. Der Sammler 2 wird aus dem Bodenglied 5 und einem Kunststoff-Spritzgussteil 6 ausgebildet, welches zugleich ein Sammlerkasten als auch ein Flanschglied zur gasdichten Festlegung des Ladeluftkühlers an einer Öffnung eines Saugrohrs 7 (siehe Schnittansicht Fig. 3) ausbildet.

Das Flanschglied 6 hat einen umlaufenden Kragen 8, der mit einer Bördelung 9, vorliegend einer Wellschlitz-Bördelung, des Bodenglieds 5 zusammenwirkt. Hierzu ist zwischen Kragen 8 und Bodenglied 5 eine O-Ring-Dichtung eingelegt, wonach das Flanschglied 6 mit seinem Kragen 8 kühlmitteldicht auf das Bodenglied 9 aufgesetzt wird. Durch Verformung der Wellschlitz-Bördelung 9 wird dann eine feste Verbindung von Bodenglied 5 und Flanschglied bzw. Sammlerkasten 6 hergestellt. Alternativ oder ergänzend kann dies auch durch Verrastung, Verklebung oder andere Befestigungsmaßnahmen erfolgen.

Seitlich des Kragens 8 des Flanschglieds 6 erstreckt sich eine umlaufende Flanschfläche 10 mit Schraublöchern 10a, mittels derer eine gasdichte Befestigung des Flanschglieds 6 an einem Rand der Saugrohröffnung erfolgt. Hierzu kann eine weitere Nut zur Einlegung einer O-Ring-Dichtung in der Flanschfläche 10 und/oder an der Saugrohröffnung vorgesehen sein.

Weiterhin sind zwei stutzenartige Kühlmittelanschlüsse 3 einstückig an dem Flanschglied 6 ausgeformt. Zur Verteilung der Kühlmittelströme auf hinführende und rückführende Kanäle 1 ist zwischen den Kühlmittelanschlüssen 3 zudem eine Trennwand 12 vorgesehen, die ebenfalls materialeinheitlich einstückig an dem Flanschglied 6 ausgeformt ist.

An der gegenüberliegenden Seite der Flachrohre 1 ist das zweite Bodenglied 5 auf analoge Weise mit einem zweiten Sammlerkasten 13 verbunden. Dieser bildet einen Hohlraum über den Rohrenden, so dass der Kühlmittelstrom aus den hinführenden Flachrohren 1 um 180° in die rückführenden Flachrohre 1 umgelenkt wird.

Zweckmäßig ist der Kühlerblock auch auf der Seite des zweiten Sammlers 4 gegenüber dem Saugrohr abgestützt, etwa durch einen Halterung des zweiten Sammlerkastens 13 in einem elastischen Material (nicht dargestellt).

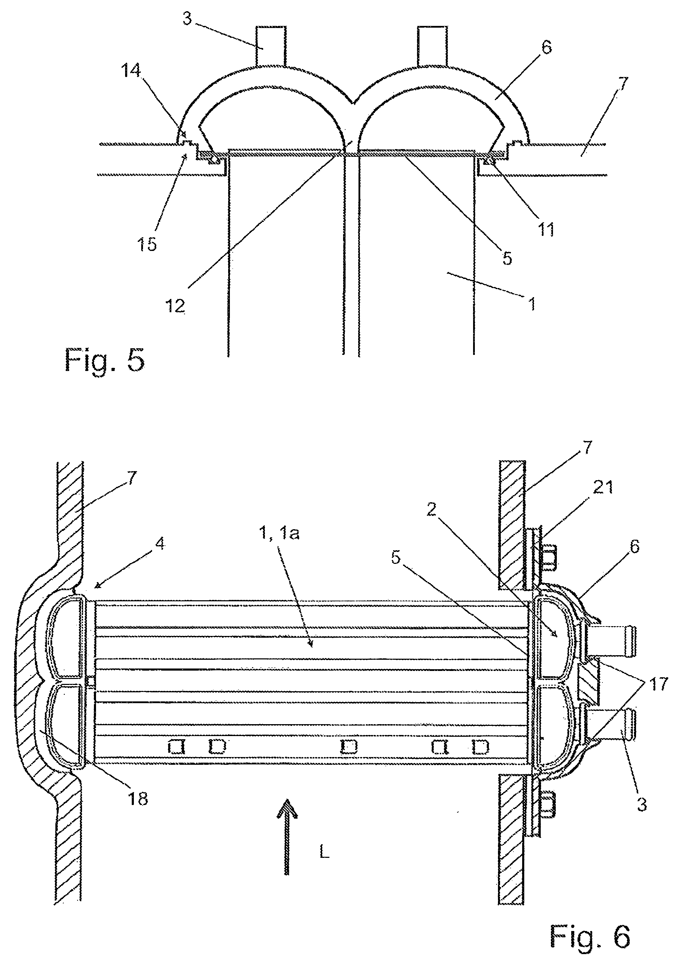

Fig. 5 zeigt ein Ausführungsbeispiel der Erfindung, bei dem im Unterschied zum vorhergehenden Beispiel eine andere Art der Abdichtung gewählt wurde.

Auch bei diesem Beispiel ist ein Flanschglied 6 zugleich als Sammlerkasten aus Kunststoff mit einer Trennwand 12 ausgebildet. Vorliegend ist jedoch zwischen einem plattenförmigen, seitlich überstehenden Bodenglied 5 und dem äußeren Rand der Öffnung im Saugrohr 7 eine O-Ring-Dichtung 11 vorgesehen, welche eine Abdichtung zwischen Kühlmittel und Ladeluft bewirkt.

Das Flanschglied 6 ist abstützend und die Dichtung andrückend auf das Bodenglied 5 aufgesetzt, wobei ein Rand 14 des Flanschglieds mit einem korrespondierenden, die Öffnung des Saugrohrs 7 umlaufenden Rand 15 durchgängig stoffschlüssig verbunden ist. Die Verbindung erfolgt vorliegend durch Verschweißung des Kunststoffmaterials von Saugrohr 7 und Flanschglied 6, zum Beispiel durch Reibschweißen oder Ultraschallschweißen. Alternativ oder ergänzend kann auch eine Verklebung erfolgen. Zur besseren Positionierung und Festlegung haben die korrespondierenden Ränder zudem ineinander greifende Abstufungen.

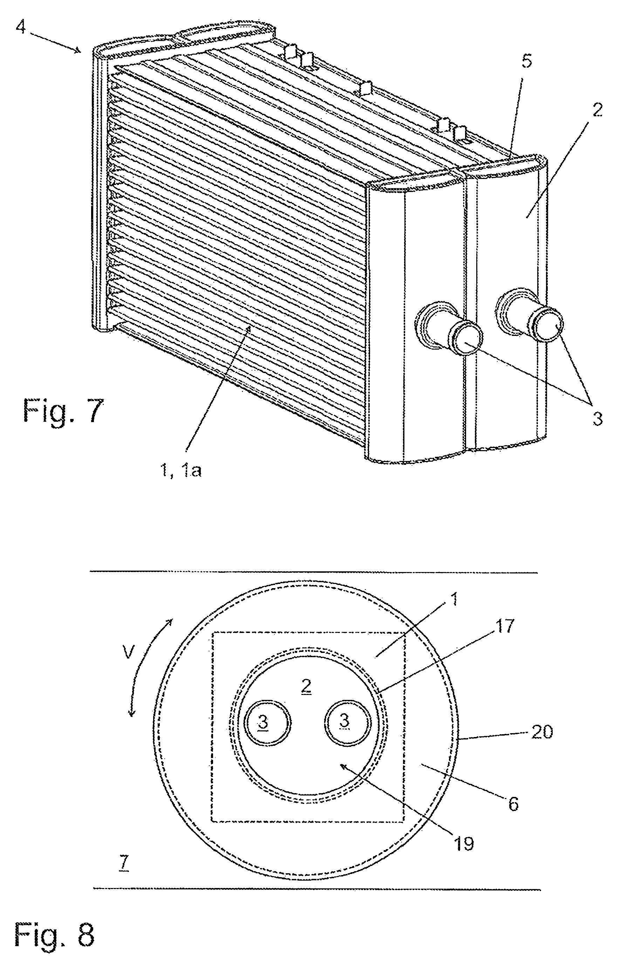

Fig. 6 und Fig. 7 zeigen ein nicht erfindungsgemäßes Beispiel. Im Unterschied zu den vorhergehenden Beispielen ist das Flanschglied 6 hier nicht zugleich als Sammlerkasten ausgeformt. Die Sammlerkästen sind vielmehr einheitlich mit den Bodengliedern 5 aus Aluminium ausgeformt und werden zusammen mit den Flachrohren 1 und den Kühlmittelanschlüssen 3 in einem Lötofen verlötet.

Die so entstehende Aluminium-Baueinheit aus Kühlerblock 1 und Sammlern 2, 4 (siehe Fig. 7) ist mittels eines aus Kunststoff bestehenden Flanschglieds 6 in dem Saugrohr 7 gehalten (siehe Fig. 6). Das Flanschglied 6 ist mit dem Saugrohr 7 vorliegend unter Verwendung einer Dichtung 21 verschraubt, kann aber auch verklebt oder verschweißt sein.

Das Flanschglied 6 übergreift den Sammler 2 des Ladeluftkühlers, wobei die Kühlmittelanschlüsse 3 des Sammlers Ausnehmungen im Flanschglied 6 durchgreifen. Dabei sorgen O-Ring-Dichtungen 17 zwischen Sammler 2 und Flanschglied 6 für eine gasdichte Trennung von Ladeluft und Außenraum. Das Flanschglied 6 bildet daher eine gasdichte Trennwand zwischen Ladeluft und Außenraum.

Am gegenüberliegenden Ende des Ladeluftkühlers ist dieser mit einem zweiten Sammler 4, in dem das Kühlmittel umgelenkt wird, gegenüber einer Innenwand des Saugrohrs 7 abgestützt, wobei zur besseren Dämpfung von Vibrationen eine elastische Einlage 18 zwischen Sammler 4 und Saugrohrwand vorgesehen ist.

Es versteht sich, dass bei dem Beispiel nach Fig. 6 und Fig. 7 eine grundsätzlich beliebige Bauform des Ladeluftkühlers vorliegen kann, ohne das Prinzip der dichtenden Festlegung in dem Saugrohr zu verlassen. Zum Beispiel kann der Ladeluftkühler auch als Stapelscheiben-Kühler ausgeformt sein (nicht dargestellt). Bei einer solchen Bauform sind andere Strukturen des Ladeluftkühlers mit Sammler und Bodenglied zu identifizieren. Unter einem Sammler kann dann ein durch überdeckende Öffnungen der Scheiben gebildeter Kanal verstanden werden, wobei zum Beispiel eine obere Grundplatte des Stapels ein Bodenglied darstellt.

Fig. 8 zeigt ein nicht erfindungsgemäßes Beispiel, bei dem es sich im Wesentlichen um eine Abwandlung des vorhergehenden Beispiels handelt. Auch hier ist das Flanschglied 6 als einen Sammler 2 übergreifendes Kunststoff-Formteil ausgebildet, das eine von Kühlmittelanschlüssen 3 durchgriffene Öffnung 19 mit einem Dichtring 17 aufweist.

Als Weiterentwicklung ist ein mit dem aus Kunststoff bestehenden Saugrohr verbundener Rand des Flanschglieds 6 kreisringförmig ausgeformt, so dass zunächst eine kreisringförmige Berührfläche 20 vorliegt. Durch Reibverschweißung erfolgt dann einfach, sicher und kostengünstig eine stoffschlüssige Verbindung von Flanschglied 6 und Saugrohr 7. Durch die kreisringförmige Ausgestaltung der Fläche 2 kann die Reibverschweißung besonders günstig mittels dynamischer Oszillationen bzw. Drehschwingungen um einen Kreismittelpunkt, (Richtung des Schwingungspfeils V) erfolgen. Die kreisförmige Reibverschweißung ist insbesondere dann vorteilhaft, wenn die kreisförmige Dichtung 17 weniger belastet wird. Soweit die Dichtung beim Reibschweißen auf der Kühlersammleroberfläche verdreht wird, ist sie dann unter Umständen vor Beschädigungen besser geschützt. Hier eignen sich insbesondere Dichtringe, die eine gewisse Gleitfähigkeit aufweisen. Durch eine Drehbewegung beim Reibschweißen ist dann die Gefahr, dass die Dichtung beschädigt wird, reduziert.

Es versteht sich, dass die spezifischen Merkmale je nach Anforderungen miteinander kombiniert werden können. Sofern die Merkmale keine besonderen Materialien erfordern, können diese beliebig sein. Das Saugrohr kann in diesem Rahmen zum Beispiel aus Kunststoff oder auch aus Aluminium bestehen.

## Patentansprüche

1. Ladeluftkühler zur Anordnung in einem Saugrohr (7), umfassend eine Mehrzahl von kühlmitteldurchströmten Kanälen (1), die einen von Ladeluft umströmbaren Kühlerblock ausbifden,
wobei der Kühlerblock mit einem Bodenglied (5) verbunden ist, und wobei ein Sammler (2) zumindest einen Kühlmittelanschluss (3) aufweist, wobei der Ladeluftkühler mittels eines Flanschglieds (6) in einer Öffnung des Saugrohrs (7) festlegtiar ist, wobei das Flanschglied (6) und das Bodenglied (5) als separate Bauteile ausgebildet sind, das Bodenglied (5) aus Aluminium besteht, wobei die Kanäle (1) als mit dem Bodenglied (5) verlötete Flachrohre ausgebildet sind, das Flanschglied (6) aus einem Kunststoff besteht, wobei das Flanschglied (6) einen Teil des Sammlers (2) ausbildet, das Flanschglied (6) eine Trennwand (12) des Sammlers (2) umfasst und der Kühlmittelanschluss (3) an dem Flanschglied (6) ausgebildet ist, wobei zwischen Bodenglied (5) und Flanschglied (6) eine Dichtung, insbesondere eine O-Ring-Dichtung, vorgesehen ist und zwischen Bodenglied (5) und Saugrohr (7) eine Dichtung (11), insbesondere eine O-Ring-Dichtung, vorgesehen ist.

2. Ladeluftkühler nach einem der vorhergehenden Ansprüche, **dadurch gekennzeichnet, dass** das Bodenglied (5) eine Bördelung (9), insbesondere Wellschlitz-Bördelung, zur Verbindung mit dem Flanschglied (6) aufweist.

3. Ladeluftkühler nach einem der vorhergehenden Ansprüche, **dadurch gekennzeichnet, dass** das Flanschglied (6) den Sammler (2) übergreift, wobei das Flanschglied (6) eine Trennwand zwischen der Ladeluft und einem Außenraum ausbildet.

4. Ladeluftkühler nach einem der vorhergehenden Ansprüche, **dadurch gekennzeichnet, dass** der Sammler (2) einschließlich des Bodenglieds (5) vollständig als verlötete Einheit aus Aluminium-Bauteilen ausgebildet ist.

5. Ladeluftkühler nach einem der vorhergehenden Ansprüche, **dadurch gekennzeichnet, dass** das Flanschglied (6) stoffschlüssig, insbesondere mittels Verklebung und/oder Verschweißung, insbesondere Reibverschweißung, mit dem Saugrohr (7) verbindbar ist.

6. Ladeluftkühler nach einem der vorhergehenden Ansprüche, **dadurch gekennzeichnet, dass** das Flanschglied (6) über eine im Wesentlichen kreisringförmige Fläche (20) mit dem Saugrohr (7) verbunden ist, insbesondere mittels Reibverschweißung.

## Claims

1. A charge air intercooler for arrangement in a suction tube (7), comprising a plurality of channels (1) through which coolant flows and which form a cooler block around which charge air can flow,
wherein the cooler block is connected to a floor member (5) and wherein a collector (2) has at least one coolant connection (3), wherein the charge air intercooler can be fastened in an opening of the suction tube (7) by means of a flange member (6), wherein the flange member (6) and the floor member (5) are designed as separate components, the floor member (5) is made of aluminium, wherein the channels (1) are designed as flat tubes soldered to the floor member (5), the flange member (6) is made of plastic, wherein the flange member (6) forms a portion of the collector (2), the flange member (6) comprises a partition wall (12) of the collector (2) and the coolant connection (3) is formed on the flange member (6), wherein between floor member (5) and flange member (6), a seal, in particular an O-ring seal is provided and between floor member (5) and suction tube (7), a seal (11), in particular an O-ring seal is provided.

2. The charge air intercooler according to any one of the preceding claims, **characterised in that** the floor member (5) has a crimping (9), in particular a corrugated, slotted crimping, for connecting to the flange member (6).

3. The charge air intercooler according to any one of the preceding claims, **characterised in that** the flange member (6) engages over the collector (2), wherein the flange member (6) forms a partition wall between the charge air and an outside space.

4. The charge air intercooler according to any one of the preceding claims, **characterised in that** the collector (2) including the floor member (5) is completely formed as soldered unit made of aluminium components.

5. The charge air intercooler according to any one of the preceding claims, **characterised in that** the flange member (6) can be connected to the suction tube (7) in a firmly bonding manner, in particular by means of adhesive bonding and/or welding, in particular friction welding.

6. The charge air intercooler according to any one of the preceding claims, **characterised in that** the flange member (6) is connected to the suction tube (7) via a substantially circular ring-shaped surface (20), in particular by means of friction welding.

## Revendications

1. Refroidisseur d'air de suralimentation servant à l'agencement dans un collecteur d'admission (7), comprenant une pluralité de conduits (1) traversés par un liquide de refroidissement, conduits qui forment un bloc de refroidisseur pouvant être baigné par de l'air de suralimentation,
où le bloc de refroidisseur est relié à un élément formant un fond (5) et où un collecteur (2) présente au moins un raccordement (3) pour le liquide de refroidissement, où le refroidisseur d'air de suralimentation peut être fixé dans une ouverture du collecteur d'admission (7), au moyen d'un élément formant un flasque (6), où l'élément formant le flasque (6) et l'élément formant le fond (5) sont configurés comme des pièces séparées, l'élément formant le fond (5) étant en aluminium, où les conduits (1) sont configurés comme des tubes plats assemblés par brasage avec l'élément formant le fond (5), l'élément formant le flasque (6) se composant d'une matière plastique, où l'élément formant le flasque (6) constitue une partie du collecteur (2), l'élément formant le flasque (6) comprend une paroi de séparation (12) du collecteur (2), et le raccordement (3) pour le liquide de refroidissement est configuré sur l'élément formant le flasque (6), où il est prévu un joint, en particulier un joint torique, entre l'élément formant le fond (5) et l'élément formant le flasque (6), et il est prévu un joint (11), en particulier un joint torique, entre l'élément formant le fond (5) et le collecteur d'admission (7).

2. Refroidisseur d'air de suralimentation selon l'une quelconque des revendications précédentes, **caractérisé en ce que** l'élément formant le fond (5) présente un bord rabattu (9), en particulier un bord rabattu à fentes ondulées, servant à l'assemblage avec l'élément formant le flasque (6).

3. Refroidisseur d'air de suralimentation selon l'une quelconque des revendications précédentes, **caractérisé en ce que** l'élément formant le flasque (6) entoure le collecteur (2), où l'élément formant le flasque (6) forme une paroi de séparation entre l'air de suralimentation et un espace extérieur.

4. Refroidisseur d'air de suralimentation selon l'une quelconque des revendications précédentes, **caractérisé en ce que** le collecteur (2), y compris l'élément formant le fond (5), est configuré, dans sa totalité, comme un ensemble brasé constitué de composants en aluminium.

5. Refroidisseur d'air de suralimentation selon l'une quelconque des revendications précédentes, **caractérisé en ce que** l'élément formant le flasque (6) peut être assemblé avec le collecteur d'admission (7), par continuité de matière, en particulier par collage et / ou par soudage, en particulier par soudage par friction.

6. Refroidisseur d'air de suralimentation selon l'une quelconque des revendications précédentes, **caractérisé en ce que** l'élément formant le flasque (6), grâce à une surface (20) pratiquement en forme d'anneau de cercle, est assemblé avec le collecteur d'admission (7), en particulier en procédant par soudage par friction.
